# EUROPÄISCHE PATENTANMELDUNG

(11) **EP 2 704 294 A1**
(43) Veröffentlichungstag der Anmeldung: **05.03.2014**
(21) Anmeldenummer: 12182752.1
(22) Anmeldetag: 03.09.2012
(51) Int. Cl.: H02K 1/27

(54) **Rotor einer permanenterregten Synchronmaschine**

(71) Anmelder: Siemens Aktiengesellschaft, 80333 München (DE)
(72) Erfinder: Schwaben, Markus, 97618 Hohenroth-Leutershausen (DE); Mader, Daniel, 97616 Bad Neustadt a.d. Saale (DE); Greubel, Klaus, 97616 Bad Neustadt (DE)

(57) **Zusammenfassung**

Die Erfindung betrifft einen Rotor (4) einer permanenterregten Synchronmaschine mit zumindest einem auf einer Welle (5) drehfest verbundenen magnetischen Träger, wobei auf der im Wesentlichen zylindrischen Oberfläche des magnetischen Trägers pro magnetischem Pol (22) zumindest ein Permanentmagnet (2) angeordnet ist, der auf der der Oberfläche des magnetischen Trägers zugewandten Seite einen axial verlaufenden Vorsprung (3) oder Schlitz aufweist, welcher Vorsprung (3) oder Schlitz in einen auf der Oberfläche des magnetischen Trägers dazu korrespondierenden Schlitz (6) oder Vorsprung eingreift, um zumindest einen tangentialen Formschluss zu erhalten.

## Beschreibung

Die Erfindung betrifft einen Rotor einer permanenterregten Synchronmaschine mit zumindest einem auf einer Welle drehfest verbundenen magnetischen Träger, wobei auf der im Wesentlichen zylindrischen Oberfläche des magnetischen Trägers Permanentmagnete angeordnet sind.

Außerdem betrifft die Erfindung ein Verfahren zur Herstellung eines Rotors einer permanenterregten Synchronmaschine.

Permanenterregte Synchronmaschinen weisen einen Rotor auf, der insbesondere an seiner einem Stator zugewandten Oberfläche mit Permanentmagneten, versehen ist. Dabei muss gewährleistet sei, dass die Permanentmagnete sich während der Fertigung, als auch während des Betriebes nicht in ihrer Lage verändern. Dies würde u.a. zu einem Verlust im Drehmomentverhalten der permanenterregten Synchronmaschine führen.

So ist aus der US 7 638 914 B2 bekannt, Permanentmagnete mit Noppen zu versehen, um eine Fixierung zu erreichen.

Des Weiteren sind aus der DE 195 46 688 C2 Permanentmagnete mit einem speziellen Querschnitt bekannt, der in eine dazu korrespondierende Ausnehmung eingreift.

Aus der JP 2006-109590 A ist eine bürstenlose Gleichstrommaschine bekannt, bei der eine Vielzahl von Permanentmagneten auf der Oberfläche des Rotors angeordnet sind, die durch eine Klebung die Permanentmagnete fixiert. Außerdem wird durch die jeweilige Positionierung des Permanentmagneten ein Staffelwinkel über die axiale Länge des Rotors erreicht.

Nachteilig bei den oben genannten Möglichkeiten, Permanentmagnete auf der Oberfläche eines Rotors zu fixieren, ist, dass die bekannten Lösungen zum Teil sehr aufwändig sind, nachträgliche Justierungen der Permanentmagnete auf dem Rotor nicht mehr gestatten und/oder einen erhöhten Herstellungsbedarf seitens des Permanentmagneten erfordern.

Ausgehend davon, liegt der Erfindung die Aufgabe zugrunde, neben der Vermeidung der oben genannten Nachteile einen Rotor zu schaffen, der einen einfachen und nachhaltigen Aufbau aufweist. Des Weiteren soll mit dem Rotor eine permanenterregte Synchronmaschine geschaffen werden, die Rastmomente vermeidet.

Die Lösung der gestellten Aufgabe gelingt durch einen Rotor einer permanenterregten Synchronmaschine mit zumindest einem auf einer Welle drehfest verbundenen magnetischen Träger, wobei auf der im Wesentlichen zylindrischen Oberfläche des magnetischen Trägers pro magnetischem Pol zumindest ein Permanentmagnet angeordnet ist, der auf der der Oberfläche des magnetischen Trägers zugewandten Seite einen axial verlaufenden Vorsprung oder Schlitz aufweist, welcher Vorsprung oder Schlitz in einen auf der Oberfläche des magnetischen Trägers dazu korrespondierenden Schlitz oder Vorsprung eingreift, um zumindest einen tangentialen Formschluss zu erhalten.

Des Weiteren gelingt die Lösung der gestellten Aufgabe auch durch ein Verfahren zur Herstellung eines Rotors durch folgende Schritte:
- Paketieren oder Stanzpaketieren eines Blechpakets mit an der Oberfläche des Blechpakets axial verlaufenden Schlitz oder Vorsprung, so dass pro magnetischem Pol wenigstens ein axial verlaufender Schlitz oder Vorsprung vorgesehen ist,
- Positionieren von insbesondere vormagnetisierten Permanentmagneten mit axial verlaufendem Vorsprung oder Schlitz derart, dass Vorsprung oder Schlitz des Permanentmagneten und Schlitz oder Vorsprung des Blechpakets ineinander greifen ineinander greifen und zumindest einen tangentialen Formschluss bilden,
- Fixieren der Permanentmagnete auf dem Blechpaket mittels einer Bandage und/oder einem Verguss und/oder Endscheiben.

Außerdem gelingt die Lösung der gestellten Aufgabe durch eine Synchronmaschine mit einem erfindungsgemäßen Rotor.

Erfindungsgemäß wird nunmehr an der Unterseite des Permanentmagneten, also auf der der Oberfläche des Rotors zuweisenden Seite des Permanentmagneten, ein Vorsprung, insbesondere in Form eines Steges angeformt.

Die Anformung geschieht entweder materialabhebend durch Fräsen oder Schleifen des Permanentmagneten oder bereits während des Herstellungsvorganges des Permanentmagneten, in dem der Steg mit angeformt wird.

Auf der Oberfläche des Rotors, also dem magnetischen Träger, der vorzugsweise als Blechpaket oder auch als Vollwelle ausgebildet sein kann, befindet sich ein entsprechender geformter Schlitz, der in axialer Richtung über die gesamte Rotorlänge führt.

Vorteilhafterweise ist dabei dieser Steg bzw. Vorsprung in axialer Richtung nicht bis zu Enden des jeweiligen Permanentmagneten geführt. Der Vorsprung ist also an den Enden jeweils zurückgesetzt. Dies gestattet eine gewisse axiale Verschiebbarkeit des Permanentmagneten auf der Oberfläche, da die axiale Ausdehnung des Steges kleiner ist als die des dazu korrespondierenden Schlitzes.

In einer anderen Ausführung des erfinderischen Gedankens wird nunmehr an der Unterseite des Permanentmagneten, also auf der der Oberfläche des Rotors zuweisenden Seite des Permanentmagneten, ein Schlitz vorgesehen.

Die Gestaltung des Schlitzes im Permanentmagneten geschieht entweder materialabhebend durch Fräsen oder Schleifen des Permanentmagneten oder bereits während des Herstellungsvorganges des Permanentmagneten, in dem der Schlitz mit gestaltet wird.

Auf der Oberfläche des Rotors, also dem magnetischen Träger, der vorzugsweise als Blechpaket oder auch als Vollwelle ausgebildet sein kann, befindet sich ein entsprechender geformter Vorsprung, der in axialer Richtung über die gesamte Rotorlänge führt oder in einzelne axiale Abschnitte unterteilt ist.

Vorteilhafterweise ist dabei dieser Schlitz in axialer Richtung nicht bis zu Enden des jeweiligen Permanentmagneten geführt. Der Schlitz ist also an den Enden jeweils zurückgesetzt. Dies gestattet eine gewisse axiale Verschiebbarkeit des Permanentmagneten auf der Oberfläche, da die axiale Ausdehnung dieses Schlitzes kleiner ist als der dazu korrespondierende jeweilige axiale Abschnitt des Vorsprungs auf dem magnetischen Träger.

Vorteilhafterweise kann, um gewisse Oberschwingungen des Luftspaltfeldes der Synchronmaschine im Betrieb zu kompensieren, eine Staffelung der Permanentmagnete über die axiale Länge des Rotors durchführt werden. Dabei wird das gesamte Blechpaket bereits bei der Herstellung in Teilblechpakete unterteilt, deren axiale Länge einem ganzzahligen Vielfachen der Länge eines Permanentmagneten entspricht.

Damit werden pro Teilblechpaket zumindest ein Permanentmagnet oder auch zwei oder drei Permanentmagnete in axialer Länge auf diesem Teilblechpaket positioniert. Um nun über die gesamte axiale Länge des Blechpakets eine Staffelung zu erzielen, wird jedes Teilblechpaket gegenüber dem vorherigen Teilblechpaket vorzugsweise im gleichen Drehsinn um einen vorgegebenen Winkel versetzt auf der Welle angeordnet. Dadurch ergibt sich über die gesamte axiale Länge des Rotors eine Staffelung der Permanentmagnete. Je nach Winkelversatz zwischen zwei Teilblechpaketen können die jeweiligen Versätze derart angeordnet werden, dass die Amplituden einer oder mehrerer Frequenzen des Oberschwingungsspektrums gezielt ausgeblendet oder zumindest reduziert werden können.

Des Weiteren wird dadurch das Rastmoment reduziert.

Falls es sich bei dem magnetischen Träger um eine Vollwelle handelt, werden die Schlitze bereits in diese Vollwelle mit oder auch ohne einen vorgebbaren Staffelwinkel eingefräst.

Alternativ dazu besteht die Vollwelle aus einzelnen, axial hintereinander angeordneten, insbesondere zylindrischen Abschnitten.

Vorteilhafterweise werden die Permanentmagnete durch zwei Endscheiben, die sich an den Stirnseiten des Rotors befinden, axial positioniert und fixiert.

Vorteilhafterweise ist dabei eine der Endscheiben auch federnd ausgeführt, um die Permanentmagnete gezielt an einer Seite anschlagen zu lassen, um einen vorgebbaren axialen Druck auf die jeweiligen Permanentmagnete einer axialen Reihe von Permanentmagneten oder eines Pols ausüben zu können.

Durch den erfindungsgemäßen Eingriff des Vorsprungs oder Schlitzes des Permanentmagneten in den Schlitz oder Vorsprung des magnetischen Trägers entsteht ein Formschluss in zumindest tangentialer Richtung, der eine präzise tangentiale Positionierung der Permanentmagnete auf dem Rotor ermöglicht. Gleichzeitig ist durch den zurückgesetzten Vorsprung, also den nicht über die gesamte axiale Länge verlaufenden Vorsprung des Permanentmagneten ein axiales Positionierung auf dem Rotor erleichtert, da Vorsprung und Schlitz nicht die gleiche Länge aufweisen.

Der beschriebene Formschluss ermöglicht es, insbesondere im Herstellungsverfahren zumindest einen temporären Haltemechanismus der Permanentmagnete auf der Oberfläche des Rotors zu erhalten, der somit erlaubt, bereits magnetisierte Permanentmagnete zu verwenden. Unabhängig von der Polarität der Permanentmagnete haften nunmehr die Permanentmagnete auf dem magnetischen Träger, also dem Blechpaket oder der Vollwelle.

Tangential werden die Permanentmagnete über den oben erwähnten Formschluss gegen abstoßende Kräfte oder anziehende Kräfte in Position gehalten.

Vormagnetisierte Permanentmagnete weisen gegenüber dem Magnetisieren des gesamten Rotors den Vorteil auf, dass auch die Randbereiche eines magnetischen Pols bei mehreren Permanentmagneten vollständig magnetisiert sind und damit das Magnetfeld technisch an die Idealform anpassbar ist, was wiederum die Rastkräfte einer permanenterregten Synchronmaschine reduziert.

Des Weiteren können die störanfälligen Magnetisierjoche für gesamte mit Magneten versehenen Rotoren durch robuste und einfache Vorrichtung mit Permanentmagneten zur Magnetisierung für Einzelmagnete, also der Permanentmagnete mit Steg ersetzt werden.

Bei der Befestigung der Permanentmagnete mit Bandage kann somit auf eine Klebung verzichtet werden. Dadurch entfallen das Auftragen des Klebers und das zeitaufwändige Aushärten des Rotors im Ofen.

Der tangentiale Formschluss zwischen magnetischem Träger und Permanentmagnet wirkt als zusätzliche Verdrehsicherung im Betrieb der permanenterregten Synchronmaschine. So führt z.B. eine nicht ausreichend vorgespannte Bandage nicht mehr zum Verdrehen der Permanentmagnete auf dem Rotor und damit nicht mehr zum Ausfall des Synchronmotors.

Die Erfindung sowie weitere vorteilhafte Ausgestaltungen der Erfindung werden in den folgenden prinzipiell dargestellten Ausführungen näher beschrieben; darin zeigen:
- FIG 1: eine prinzipielle permanentmagneterregte Synchronmaschine,
- FIG 2: einen Permanentmagneten,
- FIG 3: die Anordnung eines Permanentmagneten auf einem Blechpaket,
- FIG 4: einen Rotor in perspektivischer Darstellung,
- FIG 5: eine perspektivische Darstellung einer Stirnseite des Rotors,
- FIG 6: eine Seitenansicht eines Rotors,
- FIG 7: einen prinzipiellen Ablauf eines Herstellungsverfahrens,
- FIG 8: einen Permanentmagneten,
- FIG 9: die Anordnung eines Permanentmagneten auf einem Blechpaket
- FIG 10: perspektivische Darstellung eines Blechpaketabschnitts.

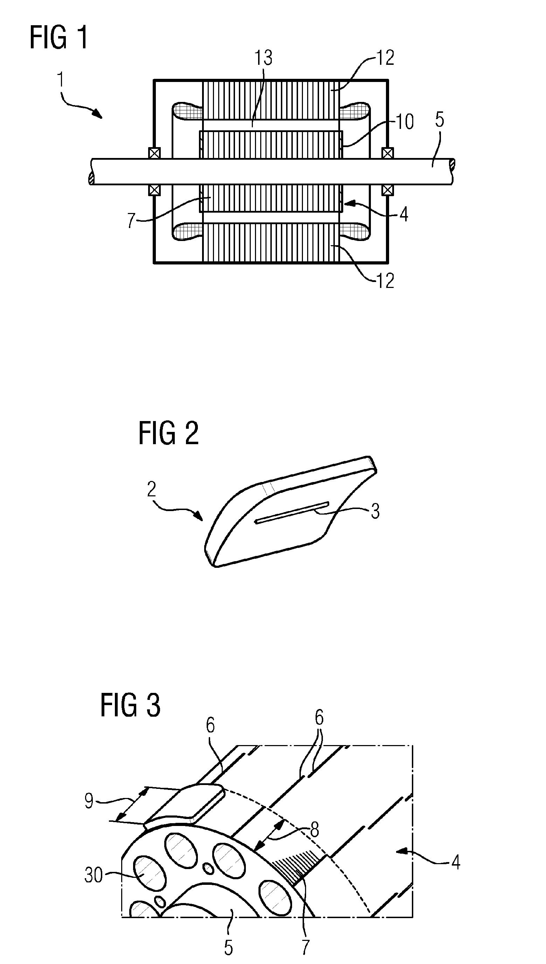

FIG 1 zeigt eine prinzipiell dargestellte permanenterregte Synchronmaschine 1, die einen Rotor 4 aufweist, dessen Blechpaket 7 drehfest mit einer Welle 5 verbunden ist. Der Rotor 4 weist an seinen Stirnseiten Endscheiben 10 auf, die zumindest die Magnete in axialer Richtung zusätzlich fixieren und ggf. Anschlagpunkte für eine Bandage 12 bilden. Die permanenterregte Synchronmaschine 1 befindet sich in einem Gehäuse, wobei der Rotor 4 mit einem Stator, der eine vorzugsweise dreiphasige Wicklung aufweist, elektromagnetisch wechselwirkt und somit eine Rotation der Welle 5 bewirkt.

FIG 2 zeigt in perspektivischer Darstellung einen Permanentmagneten 2, insbesondere mit seiner, einer Oberfläche des Rotors 4 zugewandten Seite, wobei ein Vorsprung 3 bzw. Steg zu sehen ist, dessen Längenausdehnung geringer ist als die axiale Ausdehnung des Permanentmagneten 2. Dies ist absichtlich so gewählt, damit gewisse axiale Toleranzausgleiche des Permanentmagneten 2 bei der Montage der Permanentmagneten 2 auf dem Rotor 4 vorgenommen werden können. Bei dem Permanentmagneten 2 handelt es sich in diesem Fall um einen randabgesenkten Schalenmagneten, d.h. die Mitte des Permanentmagneten 2 weist - radial betrachtet - eine größere Dicke auf als die Bereiche an den Rändern.

FIG 3 zeigt in teilperspektivischer Darstellung die Anordnung eines Permanentmagneten 2 auf dem Blechpaket 7, insbesondere auf dem Teilblechpaket 8 des gesamten Blechpakets 7. In diesem Fall entspricht die Magnetlänge 9 der Länge der axialen Länge des Teilblechpakets 8. Die axiale Länge des Teilblechpakets kann aber auch ein ganzzahliges Vielfaches der axialen Länge eines Permanentmagneten 2 betragen.

Jedes Teilblechpaket 8 weist in seinem axialen Verlauf über den Rotor 4 einen vorgebbaren Winkelversatz auf, so dass sich letztlich über die gesamte axiale Länge des Rotors 4 betrachtet, ein Staffelwinkel α einstellt. Dabei wird jedes Teilblechpaket 8 separat auf die Welle 5 aufgeschrumpft und zwar so positioniert, dass sich bezüglich des vorausgehenden Teilblechpakets 8 ein vorgebbarer Winkelversatz in Umfangsrichtung einstellt.

Dieser Winkelversatz ist über die axiale Länge des Rotors 4 betrachtet nicht zwangsläufig immer gleich sondern kann sich ändern, so dass beispielsweise die ersten beiden Teilblechpakete einen Winkelversatz von 30 Grad aufweisen, während zwischen zweitem und dritten Teilblechpaket ein Winkelversatz von 23,5 Grad eingestellt wird. Dies hängt u.a. davon ab, welche Oberschwingungsamplituden des Luftspaltfeldes reduziert oder ausgeblendet werden sollen.

Dieser Versatz ist dieser Darstellung besonders gut zu entnehmen, da dort auch die Schlitze 6 diesem Versatz entsprechen.

Die axiale Länge der Schlitze 6 muss jedoch nicht zwangsläufig, so wie in FIG 3 dargestellt der axialen Länge eines Teilblechpaketes 8 entsprechen. Es sind auch kürzere Schlitze machbar und sinnvoll. Vorteilhafterweise muss jedoch bei der Herstellung eines Teilblechpaketes 8 mit identischem Blechschnitt - also Schlitz 6 entspricht der axialen Länge eines Teilblechpaketes 8 - das Stanzwerkzeug nicht gewechselt werden.

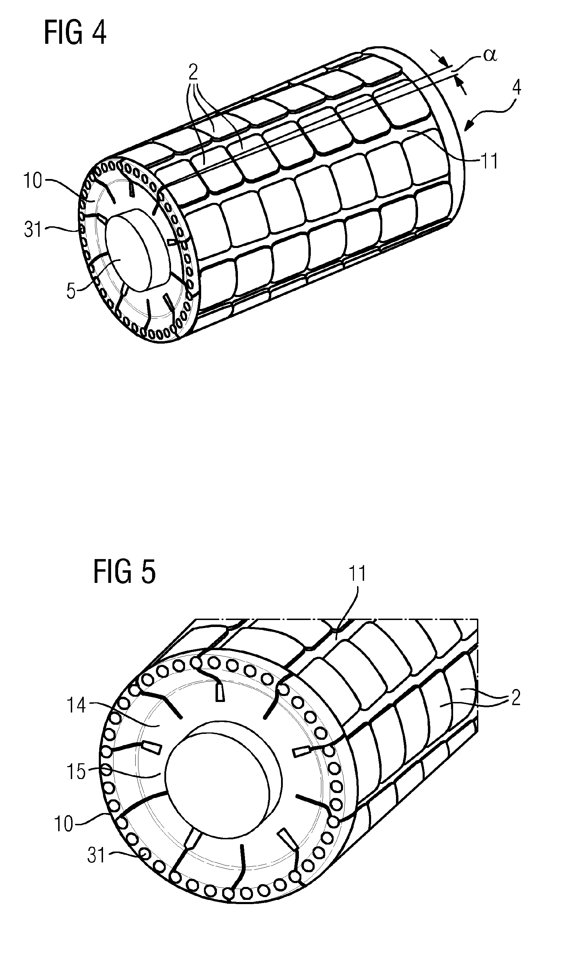

FIG 4 zeigt einen fertigen Rotor 4 lediglich noch ohne Bandage, bei dem der axiale Verlauf eines magnetischen Pols, d.h. der Staffelwinkel, über die axiale Länge des Rotors gezeigt ist. An den Stirnseiten des Rotors 4 befinden sich die Endscheiben 10, die gleichzeitig eine axiale Fixierung der Permanentmagnete gewährleisten. Die radiale Ausdehnung der Endscheiben 10 entspricht im Wesentlichen der radialen Ausdehnung des Blechpakets 7 mit den Permanentmagneten 2.

Besonders vorteilhaft ist es, wenn zumindest eine der Endscheiben 10 federnd ausgeführt ist, d.h. dass diese Endscheibe Druckfinger 14 ausbildet, die zusammen mit einem Kranz, der die Druckfinger 14 zusammenhält eine axiale Druckwirkung auf die Permanentmagnete 2 ausübt. Damit können in einfacher Art und Weise Toleranzen der Permanentmagnet 2, die sich über eine axiale Aufsummierung einstellen, einfach kompensiert werden ohne dass die axiale Krafteinleitung in die Permanentmagnete 2 - wie bei einer starren Endscheibe - zu groß werden würde. Dies verhindert somit ev. Brüche von Permanentmagneten 2.

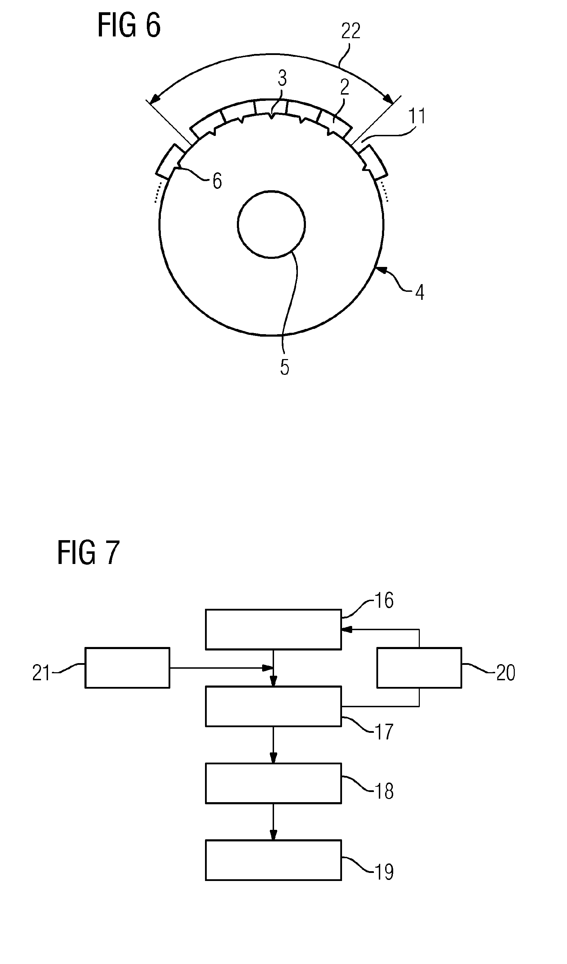

FIG 6 zeigt in eine Seitenansicht einen vierpoligen Rotor, wobei jeder magnetische Pol 22, in Umfangsrichtung betrachtet, in diesem Fall aus fünf Permanentmagneten besteht. Auch in diesem Fall weist jeder Permanentmagnet einen Vorsprung auf, der mit einem dazugehörigen Schlitz des Blechpakets korrespondiert, indem er innen eingreift und damit seine Position in Umfangsrichtung formschlüssig fixiert.

FIG 7 zeigt prinzipiell das Herstellungsverfahren eines dementsprechenden Rotors 4. Ausgegangen wird dabei von gestanzten Blechen, die nicht nur die Wellenöffnung oder Kühlkanalöffnungen, sondern auch bereits die Schlitze 6 aufweisen. Danach wird das Blechpaket 7 durch Paketieren 16 gebildet. Anschließend werden auf diesem Blechpaket 7, das ggf. auch bereits durch Teilblechpakete 8 einen Staffelwinkel ausbildet, Permanentmagnete, insbesondere durch eine Vormagnetisierung 21 diese vormagnetisierte Permanentmagnete 2 mit ihren axial verlaufenden Vorsprüngen auf dem Blechpaket 7 positioniert 17 derart, dass Vorsprung 3 und Schlitz 6 ineinandergreifen und einen tangentialen Formschluss bilden.

Die nunmehr positionierten Permanentmagnete 2 werden nunmehr auf dem Blechpaket 7 bzw. auf den axial hintereinander angeordneten Teilblechpaketen 8 durch Endscheiben 10 an den Stirnseiten fixiert und positioniert 18. Mit einer Bandage 12 wird nunmehr eine Fixierung 19 der Permanentmagnete 2 auf dem Blechpaket 7 des Rotors 4 erreicht. Die Endscheiben 10 bilden vorteilhafterweise auch den Anfangspunkt und einen Endpunkt für die Bandage 12, die dort aufgelegt werden kann.

Es werden also nach dem Paketieren 16 der gestanzten Bleche oder dem Bereitstellen der vorbereiteten Vollwelle, die Permanentmagnete 2 auf der Oberfläche positioniert 17. Gegebenenfalls sind die Permanentmagnete 2 vormagnetisiert 21 worden. Vor allem bei Einstellen eines Staffelwinkels sind die vorigen Schritte ggf. zu wiederholen. Anschließend werden die Endscheiben 10 angebracht 19. Danach werden die Permanentmagnete 2 bandagiert 18, indem die Endscheiben 10 einen definierten Anfangs- und Endbereich der Bandage bilden, wo die Bandage befestigt wird.

Vorteilhafterweise können zwischen dem Paketieren 16 und Aufschrumpfen der Welle die Staffelwinkel der Teilblechpakete 8 eingestellt werden.

Besonders vorteilhaft ist es, wenn die Permanentmagnete 2 bereits vormagnetisiert sind. Aufgrund dieser Vormagnetisierung und dem Formschluss durch Vorsprung 3 und Schlitz 6 halten die Permanentmagnete 2 bereits auf dem Blechpaket 7 und erleichtern somit die weiteren Verfahrensschritte insbesondere bis zur Bandagierung und/oder vollständigen Aufmagnetisierung.

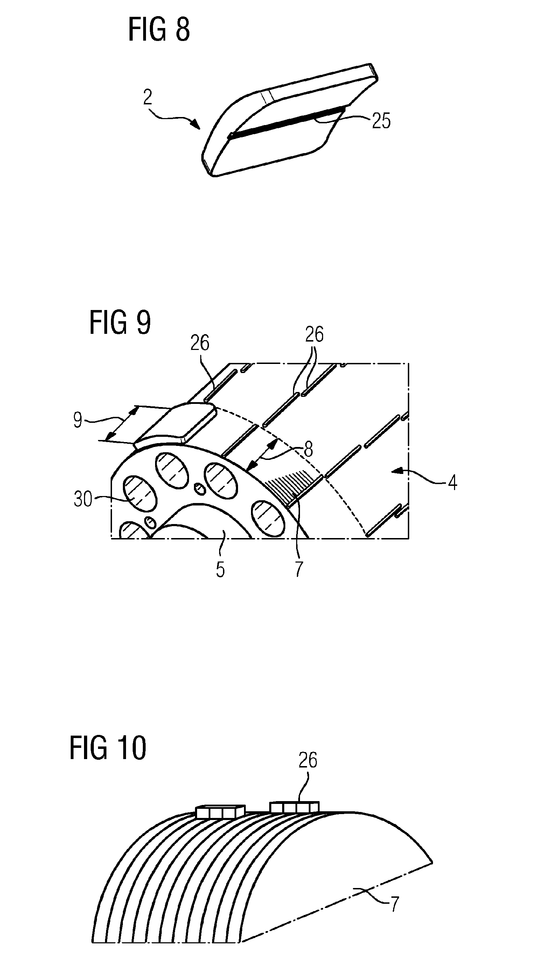

In einer anderen Ausführungsform ist jeweils ein Schlitz 25 in den Permanentmagneten 2 vorgesehen und die dazu korrespondierenden Vorsprünge 26 sind im Blechpaket 7 des Rotors 4 vorgesehen, wie dies FIG 8 zu entnehmen ist. Die Länge dieser Vorsprünge 26 im Blechpaket 7 oder Teilblechpaket 8 entspricht dabei nicht zwangsläufig der axialen Länge des Schlitzes 25 im Permanentmagnet 2. Vielmehr kann er auch kürzer ausgeführt sein, wie dies FIG 10 zu entnehmen ist. Dabei sind beispielsweise pro Teilblechpaket 8 mit fünf Blechen nur drei mit einem Vorsprung 26 ausgebildet. Derartige Blechpakete lassen sich stanzpaketiert ebenfalls einfach herstellen.

Die konstruktiven Merkmale der oben erwähnten Ausführungsformen und deren Vorteile können auch auf diese Ausführung übertragen werden.

FIG 9 zeigt einen Ausschnitt eines Rotors 4 mit mehreren Teilblechpaketen 8 deren axiale Länge der axialen Länge eines Permanentmagneten 2 entspricht. Die axiale Länge der Vorsprünge dieser Bleche entspricht der Länge der Teilblechpakete.

Axial verlaufende Öffnungen 30 im Blechpaket 7 mit ggf. axial fluchtenden Öffnungen 31 in den Endscheiben 10 gestatten eine Luftkühlung des Rotors 4.

Die Darstellungen der Permanentmagnete 2 sind in den Figurenbeschreibungen schwerpunktmäßig auf Schalenmagnete beschränkt. Selbstverständlich ist der erfinderische Gedanke auch auf Plättchenmagnete und Polygonmagnete anwendbar, mit dementsprechend an der Oberfläche ausgestalteten magnetischen Trägern. Der erfinderische Gedanke lässt sich ebenso auf sich Rotoren 4 anwenden, wobei pro magnetischen Pol, in Umfangsrichtung betrachtet mehrere Permanentmagnete 2 einen Pol 22 bilden.

Entscheidend ist u.a. dass eine Vorfixierung (Vormagnetisierung und/oder Formschluss) der Permanentmagnete 2 auf dem Rotor 4 geschaffen ist, die für weitere Herstellungsschritte ein Verschieben der Permanentmagnete 2 auf der Oberfläche des Rotors 4 ausschließt, aber dennoch eine Ausgleich von herstellungsbedingten Toleranzen bei Blechen und/oder Permanentmagneten 2 zulässt. Des Weiteren wird erfindungsgemäß in einfacher Art und Weise auch eine Staffelung bzw. Schrägung eines magnetischen Pols über seine axiale Länge geschaffen.

## Patentansprüche

1. Rotor (4) einer permanenterregten Synchronmaschine (1) mit zumindest einem auf einer Welle (5) drehfest verbundenen magnetischen Träger, wobei auf der im Wesentlichen zylindrischen Oberfläche des magnetischen Trägers pro magnetischem Pol (22) zumindest ein Permanentmagnet (2) angeordnet ist, der auf der der Oberfläche des magnetischen Trägers zugewandten Seite einen axial verlaufenden Vorsprung (3) oder Schlitz (25) aufweist, welcher Vorsprung (3) oder Schlitz (25) in einen auf der Oberfläche des magnetischen Trägers dazu korrespondierenden Schlitz (6) oder Vorsprung (26) eingreift, um zumindest einen tangentialen Formschluss zu erhalten.

2. Rotor (4) einer permanenterregten Synchronmaschine (1) nach Anspruch 1, **dadurch gekennzeichnet, dass** der Vorsprung (3) einen vorgebbaren axialen Abschnitt des Permanentmagneten (2) einnimmt.

3. Rotor (4) einer permanenterregten Synchronmaschine (1) nach Anspruch 1 oder 2, **dadurch gekennzeichnet, dass** die magnetischen Pole (22) des Rotor (4) in ihrem axialen Verlauf eine Staffelung aufweisen.

4. Rotor (4) einer permanenterregten Synchronmaschine (1) nach einem der vorhergehenden Ansprüche, **dadurch gekennzeichnet, dass** der Rotor (4) an seinen Stirnseiten Endscheiben (10) aufweist.

5. Rotor (4) einer permanenterregten Synchronmaschine (1) nach Anspruch 4, **dadurch gekennzeichnet, dass** zumindest eine Endscheibe (10) federnd ausgeführt ist.

6. Synchronmaschine (1) mit einem Rotor (4) nach einem der Ansprüche 1 bis 5.

7. Verfahren zur Herstellung eines Rotors (4) durch folgende Schritte:
- Paketieren oder Stanzpaketieren eines Blechpakets (7) mit an der Oberfläche des Blechpakets (7) axial verlaufenden Schlitz (6) oder Vorsprung (26), so dass pro magnetischem Pol (22) wenigstens ein axial verlaufender Schlitz (6) oder Vorsprung (26) vorgesehen ist,
- Positionieren von, insbesondere vormagnetisierten Permanentmagneten (2) mit axial verlaufendem Vorsprung (3) oder Schlitz (25) derart, dass Vorsprung (3) oder Schlitz (25) des Permanentmagneten (2) und Schlitz (6) oder Vorsprung (26) des Blechpakets (7) ineinander greifen und zumindest einen tangentialen Formschluss bilden,
- Fixieren der Permanentmagnete (2) auf dem Blechpaket (7) mittels einer Bandage (12)und/oder einem Verguss und oder Endscheiben (10).

8. Verfahren nach Anspruch 7, **dadurch gekennzeichnet, dass** die Bandage (12) und/oder die Permanentmagnete (2) durch Endscheiben (10) an den Stirnseiten des Blechpakets (7) positioniert und fixiert werden.

9. Verfahren nach Anspruch 7 oder 8, **dadurch gekennzeichnet, dass** das Blechpaket (7) mehrere Teilblechpakete (8) aufweist, deren axiale Ausdehnung ein ganzzahliges Vielfaches einer axialen Länge eines Permanentmagneten (2) ist und wobei das Teilblechpaket (8) mit einer Welle (5) derart drehfest positioniert wird, dass sich über dem axialen Verlauf des Rotors (4) eine vorgebbare Staffelung der Permanentmagnete (2) eines magnetischen Pols (22) ergibt.
